(19) Europäisches Patentamt
European Patent Office
Office européen des brevets

(11) Publication number : **0 614 943 A2**

(12) **EUROPEAN PATENT APPLICATION**

(21) Application number : **94301422.5**

(22) Date of filing : **28.02.94**

(51) Int. Cl.$^5$ : **C08L 55/02,** C08L 67/02, C08L 25/12

(30) Priority : **12.03.93 US 30989**

(43) Date of publication of application : **14.09.94 Bulletin 94/37**

(84) Designated Contracting States : **DE ES FR GB IT NL**

(71) Applicant : **GENERAL ELECTRIC COMPANY**
**1 River Road**
**Schenectady, NY 12345 (US)**

(72) Inventor : **Kuruganti, Vijaya Kumar**
**1515 20th Street**
**Parkersburg, West Virginia 26101 (US)**
Inventor : **Angeli, Stephen Richard**
**5496 Northwood Drive**
**Hickory, North Caorlina 28601 (US)**
Inventor : **Wozny, John Carl**
**24025 Birster Road,**
**P.O. Box 112**
**Coolville, Ohio 45723 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **ABS/PBT blends exhibiting improved surface appearance.**

(57) Thermoplastic blend compositions are provided containing a polybutylene terephthalate resin, a rubber modified graft copolymer and an amount of a metal salt of a monocarboxylic acid sufficient to improve the surface appearance of the composition upon injection molding thereof. The compositions are useful for making molded articles.

EP 0 614 943 A2

## BACKGROUND OF THE INVENTION

### FIELD OF THE INVENTION

The present invention relates to polyester/rubber modified graft copolymer blends, and more particularly, relates to polybutylene terephthalate/acrylonitrile-butadiene-styrene graft copolymer blends exhibiting improved surface appearance.

### DESCRIPTION OF THE RELATED ART

Blends of polybutylene terephthalate resin and acrylonitrile-butadiene-styrene graft copolymers are known. When such blends are injection molded they often exhibit chattering surface blemishes.

Consequently, there is a desire to provide polybutylene terephthalate resin/acrylonitrilebutadiene-styrene graft copolymer blends that exhibit improved surface appearances following injection molding thereof.

## SUMMARY OF THE INVENTION

The present invention involves thermoplastic compositions comprising polybutylene terephthalate resin, a rubber modified graft copolymer, a non-grafted rigid vinyl aromatic/vinyl cyanide copolymer, and an amount of a metal salt of a monocarboxylic fatty acid sufficient to improve the surface appearance of the composition upon injection molding thereof. The compositions are useful for making molded articles.

## DETAILED DESCRIPTION OF THE INVENTION

Thermoplastic polyester resins such as polyalkylene terephthalate resins, and specifically polybutylene terephthalate resins (also referred to herein as polybutylene terephthalates and polybutylene terephthalate polymers) are well known in the art. Suitable polybutylene terephthalate polymers are disclosed, for example, in U.S. Patents Nos. 4,066,627; 4,184,033; 4,069,278 and 4,593,077, all of which are incorporated herein by reference.

The polybutylene terephthalate resins contains at least 90 mole percent, based on the dicarboxylic acid component, of terephthalic acid residues and at least 90 mole percent, based on the diol component of 1,4 butane diol residues.

In addition to terephthalic acid residues, the polybutylene terephthalates may contain up to 10 mole percent of residues of other aromatic, aliphatic or cycloaliphatic dicarboxylic acids, for example succinic acid, adipic acid or isophthalic acid residues. In addition to butane diol residues, they may contain up to 10 mole percent of residues of another diol which may correspond to the following formula:

$$HO\text{-}C_nH_{2n}\text{-}OH$$

in which n is an integer of from 2 to 10. More particularly, up to 10 mole percent of alkyl-substituted diols such as neopentyl glycol, 2,2,4-trimethyl-1,6-hexane diol, 2-ethyl-1,3-propane diol, 2,2,4-trimethyl-1,3-pentane diol, 2-methyl-2,4-pentane diol, 3-methyl-2,4-pentane diol or 2-ethyl-1,3-hexane diol may also be incorporated (German Offenlegungsschrifts Nos. 2,407,674, 2,407,776 and 2,715,932).

The polybutylene terephthalates may also be branched by components having a branching effect such as polycarboxylic acids or polyols (German Auslegeschrift No. 1,900,270).

The polybutylene terephthalates used as components preferably have an intrinsic viscosity of generally from 0.7 to 1.5 dl/g., more preferably from 0.8 to 1.3 dl/g and, even more particularly, from 0.8 to 1.05 dl/g, as measured in phenol dichlorobenzene (1:1 parts by weight).

The rubber modified graft copolymer which is included in the compositions of the invention comprises a rubber substrate and a grafted vinyl aromatic/vinyl cyanide polymeric portion grafted to the rubber substrate. The rubber substrate is formed from at least one diene monomer of the formula:

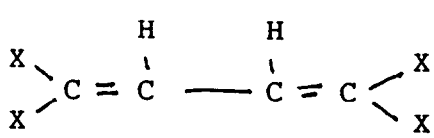

wherein X is selected from the group consisting of hydrogen, alkyl groups containing from 1 to 5 carbon atoms, chlorine and bromine. Examples of the diene monomer include butadiene, isoprene, 1, 3-heptadiene, methyl-1,3-pentadiene, 2-ethyl-1,3-pentadiene, mixtures thereof and the like. Preferably, the diene monomer comprises butadiene, wherein the rubber substrate comprises a polybutadiene substrate. Alternatively, at least one additional styrene monomer may be included in the rubber substrate, thereby forming, for example, a styrene-butadiene rubber substrate. Although the rubber modified graft copolymer may include the rubber substrate and the grafted portion in any ratio which is desired, it is preferred that the rubber modified graft copolymer comprises at least 10 weight percent of the rubber substrate, and more preferably at least 40 weight percent of the rubber substrate based on the total weight of the rubber modified graft copolymer.

The grafted polymeric portion of the rubber modified graft copolymer is preferably formed from at least one vinyl aromatic monomer and at least one vinyl cyanide monomer. The at least one vinyl aromatic monomer may comprise unsubstituted styrene monomer, substituted styrene monomer, or mixtures thereof. Substituted styrene monomers may include substituents on the aromatic portion and/or the vinyl portion, with preferred substituents being selected from the group consisting of alkyl groups of from 1 to 5 carbon atoms and halogen atoms such as chlorine and bromine. Preferred vinyl aromatic monomers include unsubstituted styrene, alphamethylstyrene, dibromostyrene and mixtures thereof. The at least one vinyl cyanide monomer which is employed in forming the grafted portion is preferably selected from the group consisting of acrylonitrile and methacrylonitrile. In a preferred embodiment, the grafted polymeric portion is formed from a styrene monomer and acrylonitrile, with the styrene and acrylonitrile being employed in a weight ratio of at least about 1:1, and more preferably, at least about 3:1.

The rubber modified graft copolymer may be formed by any of the methods well known in the art for the formation of ABS graft copolymers. For example, the graft copolymer may be formed by emulsion polymerization wherein the at least one styrene monomer and the at least one additional monomer are polymerized in the presence of the rubber substrate. As is well known in the art, such a process often results in the formation of the rubber modified graft copolymer and the formation of a non-grafted copolymer of the at least one vinyl aromatic monomer and the at least one vinyl cyanide monomer, wherein the non-grafted copolymer does not contain the rubber substrate.

The metal salt of a carboxylic fatty acid can be at least one monocarboxylic fatty acid salt of the monocarboxylic fatty acids having from 12 to 24 carbon atoms, preferably 16 to 22, carbon atoms per molecule, inclusive. Preferred metals are Ca, Mg, Ba, Sr, and Zn. Examples of fatty acids which can be used in the form of their metal salts include, among others, the following: lauric acid, myristic acid, palmitic acid, stearic acid, behenic acid, and the like, including mixtures thereof. Zinc stearate is a presently preferred metal salt of a monocarboxylic acid for use in the practice of the invention.

Said metal salts of monocarboxylic fatty acids can be used in any small but effective amounts sufficient to improve the surface appearance of said compositions upon injection molding of the compositions.

The compositions comprise, preferably consist essentially of, and optionally consist of the polybutylene terephthalate, rubber modified graft copolymer, rigid copolymer, and the metal salt of the carboxylic acid with or without minor amounts of other additives.

Suitable additional additives include organic phosphite esters such as bis(2,4 di-t-butyl) pentaerythritol diphosphite, phenolic antioxidants, dilauryldithiopropionate, polyolefin lubricant or pentaerythritol tetrastearate, trisnonylphenyl phosphite, carbon black and/or pigment.

Preferably, the compositions comprise from about 10 to about 90 weight percent of the polybutylene terephthalate, from about 5 to about 90 weight percent of the rubber modified graft copolymer, from 0 to about 60 weight percent of the non-grafted vinyl aromatic-vinyl cyanide copolymer and from 0.01 to 5 percent by weight metal salt of a monocarboxylic fatty acid based on the total weight of the composition. In a further preferred embodiment, the compositions comprise from about 25 to about 75 weight percent of the polybutylene terephthalate, from about 10 to about 50 weight percent of the rubber modified graft copolymer, from about 10 to about 55 weight percent of the non-grafted rigid vinyl aromatic-vinyl cyanide copolymer, and from 0.5 to 2.5 weight percent metal salt of monocarboxylic fatty acid based on the total weight of the composition.

Most preferably the composition comprises polybutylene terephthalate present at of from 35 to 45 percent by weight based on the total weight of the composition, the non-grafted rigid vinyl aromatic-vinyl cyanide copolymer is present at a level of from 22 to 51 percent by weight based on the total weight of the composition, the rubber modified graft copolymer is present at a level of from 14 to 33 percent by weight based on the total weight of the composition and the metal salt of the monocarboxylic fatty acid is present at a level of from 1.0 to 2.0 percent by weight based on the total weight of the composition.

**Examples**

Table I

| | 1 | A | B | 2 |
|---|---|---|---|---|
| PBT 1 | 45 | 45 | 35 | 35 |
| SAN 1 | 22 | 22 | -- | -- |
| ABS 3 | -- | -- | 51 | 51 |
| ABS 1 | 33 | 33 | -- | -- |
| ABS 2 | -- | -- | 14 | 14 |
| Zinc Stearate | 1 | -- | -- | 2 |
| Surface Appearance Rating** | 0 | 4 | 4 | 0 |

**Surface Appearance Rating:
0 = Smooth surface with no visible blemishes
1 = Very faintly visible surface blemishes
2 = Faintly visible surface blemishes
3 = Visible surface blemishes
4 = Very visible surface blemishes
5 = Very badly visible surface blemishes

From Table I it is quite evident that the experimental blends 1 and 2 which contain small amounts of zinc stearate possess much better surface appearances than their control blends A and B, respectively.

Examples 1 and 2 contain zinc stearate. Comparative examples A and B do not contain a metal salt of a carboxylic acid. Examples 1 and A contain the same ingredients in the same amounts except example 1 contains 1 percent by weight zinc stearate whereas comparative example A contains no zinc stearate. Examples 2 and B contain the same ingredients in the same amounts except example 2 contains 2 percent by weight zinc stearate whereas comparative example B contains no zinc stearate.

PBT 1 is polybutylene terephthelate resin.

SAN 1 non-grafted rigid styrene acrylonitrile copolymer having 75 weight percent styrene and 25 weight percent acrylonitrile.

ABS 1 is a rubber modified graft copolymer comprising 50 weight percent polybutadiene rubber having grafted thereon a copolymer of styreneacrylonitrile in a weight ratio of 3:1.

ABS 2 is a rubber modified graft copolymer comprising 52 weight percent polybutadiene rubber having grafted thereon a copolymer of styreneacrylonitrile in a weight ratio of 2.3:1.

ABS 3 is styrene, alpha methyl styrene, acrylonitrile, butadiene graft copolymer having 8.5 weight percent styrene, 26.5 weight percent acrylonitrile, 51 weight percent $\alpha$-methylstyrene and 14% polybutadiene rubber.

Zinc stearate is a commercial product from Witco Company.

Examples 1, 2, A and B contained 0.25 weight percent of bis(2,4 di-t-butyl) pentaerythritol diphosphite available from GE Specialty Chemicals, Inc. under the trademark Ultranox 626 phosphites; 0.25 weight percent Irganox 3114 which is a hindered phenolic available from Ciba-Geiby Corporation; .125 weight percent DLDTP which is dilauryldithiopropionate; 0.75 weight percent Emery 3008 which is fatty acid ester of pentaerythritol. Examples 2 and B contained 0.12 percent by weight of trinonylphenyl phosphite; and 0.5 percent by weight carbon black. Examples 1 and A contained 1.21 percent by weight of mixed pigments.

**Claims**

**1.** A thermoplastic resin composition comprising

(a) a thermoplastic polybutylene terephthalate resin,
(b) a rubber modified graft copolymer comprising a diene rubber having grafted thereon at least one vinyl aromatic monomer and at least one vinyl cyanide monomer,
(c) a non-grafted copolymer of at least one vinyl cyanide monomer and at least one vinyl aromatic monomer, and
(d) at least one metal salt of a carboxylic fatty acid present in an amount sufficient to reduce the surface blemishes of the composition upon injection molding thereof.

2. The composition of Claim 1 wherein said polybutylene terephthalate present at a level of from 35 to 45 percent by weight based on the total weight of the composition, said rubber modified graft copolymer is present at a level of from 14 to 33 percent by weight based on the total weight of the composition, said non-grafted copolymer is present at a level of from 22 to 51 percent by weight based on the total weight of the composition, and said metal salt of a carboxylic fatty acid is present at a level of from 0.5 to 2.5 percent by weight based on the total weight of the composition.

3. The composition of Claim 2 further containing from 0.01 to 5 percent by weight of at least one additive is selected from the group consisting of carbon black, organic pigments, definic mold releases, dilauryldithiopropionate, organic phosphite esters.

4. The composition of claim 1 wherein said composition consists essentially of said polybutylene terephthalate, said rubber modified graft copolymer, said non-grafted copolymer and said metal salt of carboxylic fatty acid.

5. The composition of claim 4 wherein said rubber modified graft copolymer is an acrylonitrile-butadiene-styrene graft copolymer, said non-grafted copolymer is a styrene-acrylonitrile copolymer, and said metal salt of carboxylic fatty acid is zinc stearate.

6. A process for obtaining an injection molded polyalkylene terephthalate/rubber modified graft copolymer blend having an improved surface appearance; said process comprising injection molding a composition comprising:
(a) a thermoplastic polybutylene terephthalate resin,
(b) a rubber modified graft copolymer comprising a diene rubber having grafted thereon at least one vinyl aromatic monomer and at least one vinyl cyanide monomer,
(c) a non-grafted copolymer of at least one vinyl cyanide monomer and at least one vinyl aromatic monomer, and
(d) at least one metal salt of a carboxylic fatty acid present in an amount sufficient to improve the surface appearance of the composition upon injection molding thereof.

7. The process of claim 6 wherein said composition consists essentially of said polybutylene terephthalate, said rubber modified graft copolymer, said non-grafted copolymer, and said metal salt of carboxylic acid.

8. A thermoplastic composition comprising:
(a) a thermoplastic polybutylene terephthalate resin present at a level of from 10 to 90 precent by weight based on the entire weight of the composition,
(b) a rubber modified graft copolymer comprising a diene rubber having grafted thereon at least one vinyl aromatic monomer and at least one vinyl cyanide monomer, said graft copolymer being present at a level of from 10 to 50 percent by weight based on the entire weight of the composition;
(c) a non-grafted copolymer of at least one vinyl cyanide monomer and at least one vinyl aromatic monomer, said non-grafted copolymer being present at a level of from 10 to 55 percent by weight based on the entire weight of the composition, and
(d) at least one metal salt of a carboxylic fatty acid having from 12 to 24 carbon atoms, said metal salt of a monocarboxylic fatty acid being present at a level of from 0.01 to 5 percent by weight based on the entire weight of the composition.

9. The composition of Claim 8 wherein said composition consists essentially of said polybutylene terephthalate resin, said rubber modified graft copolymer, said non-grafted copolymer, and said metal salt of a carboxylic fatty acid.

10. The composition of Claim 8 wherein said composition consists of said polybutylene terephthalate resin, said rubber modified graft copolymer, said non-grafted copolymer, and said metal salt of a carboxylic fatty acid.